**Europäisches Patentamt**

(19) **European Patent Office**

**Office européen des brevets**

(11) Veröffentlichungsnummer: **0 129 221**
**B1**

(12) # EUROPÄISCHE PATENTSCHRIFT

(45) Veröffentlichungstag der Patentschrift:
01.07.87

(51) Int. Cl.⁴: **B 60 Q 9/00,** G 05 F 3/18, B 60 R 16/02

(21) Anmeldenummer: 84106832.3

(22) Anmeldetag: 15.06.84

(54) Schaltungsanordnung für ein Zugfahrzeug.

(30) Priorität: 21.06.83 DE 3322314

(43) Veröffentlichungstag der Anmeldung:
27.12.84 Patentblatt 84/52

(45) Bekanntmachung des Hinweises auf die Patenterteilung:
01.07.87 Patentblatt 87/27

(84) Benannte Vertragsstaaten:
AT BE CH DE FR GB IT LI LU NL SE

(56) Entgegenhaltungen:
DE-A-2 033 252
GB-A-1 207 345
GB-A-1 386 914

PATENT ABSTRACTS OF JAPAN, Band 6, Nr. 233,
(P-156) 1111 , 19. November 1982; & JP - A - 57 132 214
(MATSUSHITA) 16-08-1982
BROWN BOVERI MITTEILUNGEN, Heft 12, 1975,
Seiten 561-564; J. MILAVEC: "Speisung
elektronischer Geräte auf Triebfahrzeugen und
Schiffen"

(73) Patentinhaber: Gebhard, Dietrich, Erfurter Strasse
8, D-7502 Malsch 1 (DE)

(72) Erfinder: Gebhard, Dietrich, Erfurter Strasse 8,
D-7502 Malsch 1 (DE)

(74) Vertreter: Patentanwälte Kohler - Schwindling -
Späth, Hohentwielstrasse 41, D-7000 Stuttgart 1
(DE)

EP 0 129 221 B1

## Beschreibung

Die Erfindung geht aus von einer Schaltungsanordnung für ein Zugfahrzeug eines aus dem Zugfahrzeug und einem Hänger bestehenden Wagenzuges, bei der das Zugfahrzeug wenigstens eine Steckdose aufweist, an der gegenüber der Betriebsspannung des Zugfahrzeuges verminderte Signalspannungen für den Hänger abnehmbar sind, und vorzugsweise eine weitere Steckdose vorgesehen ist, die Signalspannungen führt, die der Betriebsspannung des Zugfahrzeuges entsprechen.

Eine derartige Schaltungsanordnung ist aus der deutschen Zeitschrift ATV, April 1982, Seite 58, bekannt.

Die Bordspannung, bei der ein Zugfahrzeug eines Wagenzuges arbeitet, ist im allgemeinen fest eingestellt, jedoch bei unterschiedlichen Zugfahrzeugen nicht einheitlich. So ist es bekannt, bei Zugfahrzeugen, die über einen besonders großen Diesel-Motor verfügen und auch bei besonders tiefen Temperaturen arbeiten sollen, eine elektrische Einrichtung mit hoher Bordspannung, beispielsweise 24 V vorzusehen, während bei anderen, vorzugsweise kleineren Zugfahrzeugen eine Bordspannung von 12 V üblich ist. Auch moderne Geländefahrzeuge mit Allradantrieb verfügen gelegentlich über eine hohe Bordspannung von 24 V, die daran anhängbaren kleineren Hänger sind jedoch üblicherweise auf eine niedrigere Bordspannung von 12 V ausgelegt.

In größeren Fuhrparks kann die Situation eintreten, daß unterschiedliche Zugfahrzeuge mit unterschiedlichen Bordspannungen arbeiten. Sind in diesem Fuhrpark jedoch auch unterschiedliche Hänger vorhanden, ergeben sich Probleme, weil die Hänger in den Anschlußwerten ihrer elektrischen Einrichtungen, insbesondere den Leuchten und einer Feststellbremse auf jeweils die eine oder die andere Spannung ausgelegt sind. Um innerhalb größerer Fuhrparks die Zugfahrzeuge und Hänger in beliebiger Kombination verwenden zu können, ist es aus der eingangs genannten Zeitschrift bekannt, das Zugfahrzeug mit zwei Steckdosen zu versehen, an deren Anschlüsse die erforderlichen Signalspannungen für die Leuchten bzw. sonstigen Einrichtungen des Hängers gerührt sind. Die Signalspannungen der einen Steckdose entsprechen dabei der (höheren) Bordspannung des Zugfahrzeuges, beispielsweise 24 V, während an den Anschlüssen der weiteren Steckdose entsprechend verminderte Signalspannungen, beispielsweise 12 V, abnehmbar sind.

Die bekannte Einrichtung liefert zwar eine gegenüber der Bordspannung verminderte Spannung zur Versorgung eines Hängers, hat jedoch den wesentlichen Nachteil, daß sie eine elektriscne Anlage des Zugfahrzeuges voraussetzt, bei der ein Mittelabgriff an der Fahrzeugbatterie zugänglich ist, an der die verminderte Bordspannung, im Beispiel also 12 V, abnehmbar ist. Bei der bekannten Einrichtung mit elektromechanischen Umschaltelementen wird ein Teil der Anschlüsse für die niedrigere Signalspannung von dem Mittel-Abgriff an den Fahrzeugbatterien versorgt, so daß hierdurch eine unerwünsnte Teilentladung eines Teiles der Fahrzeugbatterie eintreten kann. Hierdurch werden die beiden Batterieteile unterschiedlich belastet und auch ungleich aufgeladen. Bei der bekannten Einrichtung werden darüber hinaus diejenigen Anschlüsse, die zu den Blinkleuchten des Hängers führen, an dem Batterieanschluß mit der hohen Bordnetzspannung, im Beispiel also 24 V, versorgt, die erforderliche niedrigere Spannung wird dabei durch Vorwiderstände erzeugt. Diese Vorgehensweise hat jedoch den wesentlichen Nachteil, daß die effektiv am Hänger zur Verfügung stehende Signalspannung von der Größe des Abschlußwiderstandes, das heißt des Innenwiderstandes der Blinklampen abhängt, der jedoch fertigungsbedingt um über 10 % schwanken kann. Demzufolge können einmal Helligkeitsunterschiede eintreten, zum anderen werden jedoch auch unterschiedliche Lampen unterschiedlich belastet, insbesondere mit Überspannungen bei hohem Innenwiderstand, so daß sich eine erhöhte Ausfallrate der Lampen einstellt.

Die bekannte Einrichtung hat den weiteren Nachteil, daß die Blinkkontrolleuchten für den Hänger unmittelbar vom Blinkgeber angesteuert werden und die Kontrolle unmittelbar am Blinkgeber selbst erfolgt, so daß eine effektive Kontrolle der Blinkleuchten des Hängers nicht möglich ist.

Schließlich hat die bekannte Einrichtung noch den Nachteil, daß die beiden Kreise für die höheren bzw. die niedrigeren Signalspannungen zwar voneinander getrennt sind, bei Ausfall des einen Kreises mit niedrigerer Spannung dieser Ausfall jedoch nicht unmittelbar am Zugwagen (-fahrzeug) erkenntlich ist.

Der Erfindung liegt demgegenüber die Aufgabe zugrunde, eine Schaltungsanordnung der eingangs genannten Art dahingehend weiterzubilden, daß die erwähnten Nachteile vermieden werden und daß in einem Zugfahrzeug mindestens gegenüber der höheren Bordspannung verminderte Signalspannungen abgenommen werden können, ohne daß ein Eingriff in die elektrische Anlage des Zugfahrzeuges nötig ist.

Diese Aufgabe wird erfindungsgemäß dadurch gelöst, daß Anschlüsse der einen Steckdose von der elektrischen Einrichtung des Zugfahrzeuges über elektronische Spannungswandler mit der Betriebsspannung des Zugfahrzeuges entsprechenden Signalspannungen beaufschlagt werden.

Vorzugsweise ist die Schaltungsanordnung dabei so ausgerichtet, daß Anschlüsse der einen Steckdose über die elektronischen Spannungswandler mit den entsprechenden Anschlüssen der anderen Steckdose verbunden sind.

Die erfindungsgemäße Schaltungsanordnung hat damit den wesentlichen Vorteil, daß eine Verzweigung der beiden Kreise für die hohen bzw. niedrigen Signalspannungen erst unmittelbar am elektrischen Ausgang des Zugfahrzeuges vorgenommen wird. Ein Eingriff in die elektrische Anlage an sich ist demgegenüber nicht erforderlich, damit ergibt sich der Vorteil, daß eine teilweise Entladung (bzw. Ladung) der Batterie nicht eintritt. Außerdem haben die elektronischen Spannungswandler gemäß der Erfindung gegenüber den elektromechanischen Umschaltelementen der bekannten Einrichtung den Vorteil, daß sie weniger störanfällig sind.

In bevorzugter Ausgestaltung der Erfindung weisen die elektronischen Spannungswandler zwischen Eingang und Ausgang einen Längsregler auf, so daß die Ausgangsspannung geregelt stabilisiert ist.

Dies hat den wesentlichen Vorteil, daß die niedrigeren Signalspannungen konstant sind, unabhängig vom jeweiligen Anschlußwert des im Hänger befindlichen Verbrauchers. Auch Signalleuchten mit unterschiedlichem Innenwiderstand werden hierdurch mit konstanter Signalspannung betrieben, so daß mit vorzeitigen Ausfällen infolge von zu hohen Spannungen nicht zu rechnen ist.

Weiterhin sind Ausführungsformen bevorzugt, bei denen die elektronischen Spannungswandler im Eingang eine Verpol-Schutzdiode und/oder in Parallelschaltung eine Überspannungs-Schutzdiodet aufweisen. Auf diese Weise ist vorteilhaft ein Schutz gegenüber fehlerhaftem Anschluß der erfindungsgemäßen Schaltungsanordnung und gegenüber Überspannungen möglich, die dann auftreten können, wenn der Regler des Generators des Zugfahrzeuges defekt sein sollte und auch wirksam bei Ausschaltvorgängen von Induktivitäten.

Besonders bevorzugt ist eine Ausführungsform, bei der die Spannungswandler mit einer elektronischen Kurzschlußstrombegrenzung versehen sind. Diese Anordnung hat im Gegensatz zu üblichen Schmelzsicherungen den Vorteil, daß nach Abhängen eines Hängers mit einem Kurzschluß in einem Kreis die entsprechende verminderte Signalspannung sofort für einen anderen Hänger wieder zur Verfügung steht, ohne daß ein Bauelement ausgewechsels werden muß. Ein Kurzschluß im 12 V-Kreis führt damit nicht zu einem Sicherungsausfall im 24 V-Kreis. Im Falle der Blinkleuchten fällt lediglien die Kontrolleuchte aus, was jedoch erwünscht ist, um den Fehler zu erkennen.

Weiterhin ist eine Ausfünrungsform bevorzugt, bei der die Anschlüsse der weiteren Steckdose für die niedere Spannung für das rechte bzw. linke Rücklicht, das Bremslicht, eine Dauerbremse oder dergleichen und das rechte bzw. linke Blinklicht des Hängers mit jeweils einem elektronischen Spannungswandler beschaltet sind. Diese Aufteilung der verschiedenen Anschlüsse hat den Vorteil, daß selbst bei Ausfall eines elektronischen Spannungswandlers die Kreise der übrigen Anschlüsse unverändert funktionsfähig bleiben. Sie hat weiterhin den Vorteil, daß elektronische Bauelemente mit niedrigerer Verlustleistung verwendet werden können, die darüber hinaus ein erhöhtes Maß an Betriebssicherheit bieten. Auch die Abfuhr der Verlustwärme der elektronischen Bauelemente in dem jeweils verwendeten Gehäuse wird auf diese Weise vereinfacht.

Sieht man erfindungsgemäß vor, daß weiterhin die elektronischen Spannungswandler für die Anschlüsse des rechten bzw. linken Rücklichtes des Hängers hinter den Sicherungen der Rücklichter des Zugfahrzeuges angeschlossen sind, ergibt sich eine kurze Leitungsführung zu den Kreisen der unterschiedlichen Anschlüsse. Insbesondere können die elekronischen Spannungswandler für die Leuchten-Anschlüsse unmittelbar an die entsprechenden Leuchten des Zugfahrzeuges angeschlossen werden. Bei der bekannten Anordnung ist hingegen eine durch das ganze Zugfahrzeug führende, nicht abgesicherte Leitung zum Mittel-Abgriff der Batterie vorgesehen, deren Ausfall zu einem Ausfall nahezu aller 12 V-Anschlüsse führt. Bei der erfindungsgemäßen Anordnung sind hingegen die Kreise bei 24 V/12 V-Betrieb im Zugfahrzeug/Hänger vollkommen gleichartig wie bei 24 V/24 V-Betrieb, was auch Wartungsarbeiten und das Auffinden von Störungen erleichtert.

Weiterhin ist eine Ausfünrungsform bevorzugt, bei der die elektroniscnen Spannungswandler für die Anschlüsse des rechten bzw. linken Blinklichts des Hängers über einen Einrtrichtungsschalter vom Blinkgeber gespeist werden. Diese Anordnung hat den Vorteil, daß ein üblicher Blinkgeber unverändert verwendet werden kann, ohne daß sich Belastungsänderungen des Blinkgebers dadurch einstellen, daß einmal ein Hänger mit hoher und ein anderes Mal ein Hänger mit niedrigerer Bordspannung verwendet wird oder die Blinklampen einen unterschiedlichen Innenwiderstand aufweisen.

Erfindungsgemäß sind weiternin in Reihe zu den elektronischen Spannungswandlern für die Versorgung der Blinklichter Stromfühler angeordnet, die eine Kontroll-Leuchte für die Blinklichter des Hängers betätigen, die zusätzlich zu der üblichen Kontroll-Leuchte für die Blinklichter des Zugwagens vorgesehen ist. Diese Ausführungsform hat gegenüber der bekannten Einrichtung, bei der die Kontroll-Leuchte unmittelbar vom Blinkgeber gespeist wird, den Vorteil, daß die Kontroll-Leuchte nur dann anspricht, wenn der gesamte Kreis, einschließlich der Blinklichter im Hänger ordnungsgemäß arbeitet.

Weitere Vorteile ergeben sich aus der Beschreibung und der beigefügten Zeichnung.

Die Erfindung ist in der Zeichnung dargestellt und wird in der nachfolgenden Beschreibung näher erläutert. Es zeigen:

Fig. 1 einen Stromlaufplan einer Ausführungsform einer erfindungsgemäßen Schaltungsanordnung;

Fig. 2 einen Stromlaufplan der elektriscnen Einrichtung eines Hängers;

Fig. 3 ein Schaltbild einer Ausführungsform eines elektronischen Spannungswandlers, wie er bei der erfindungsgemäßen Schaltungsanordnung Verwendung finden kann.

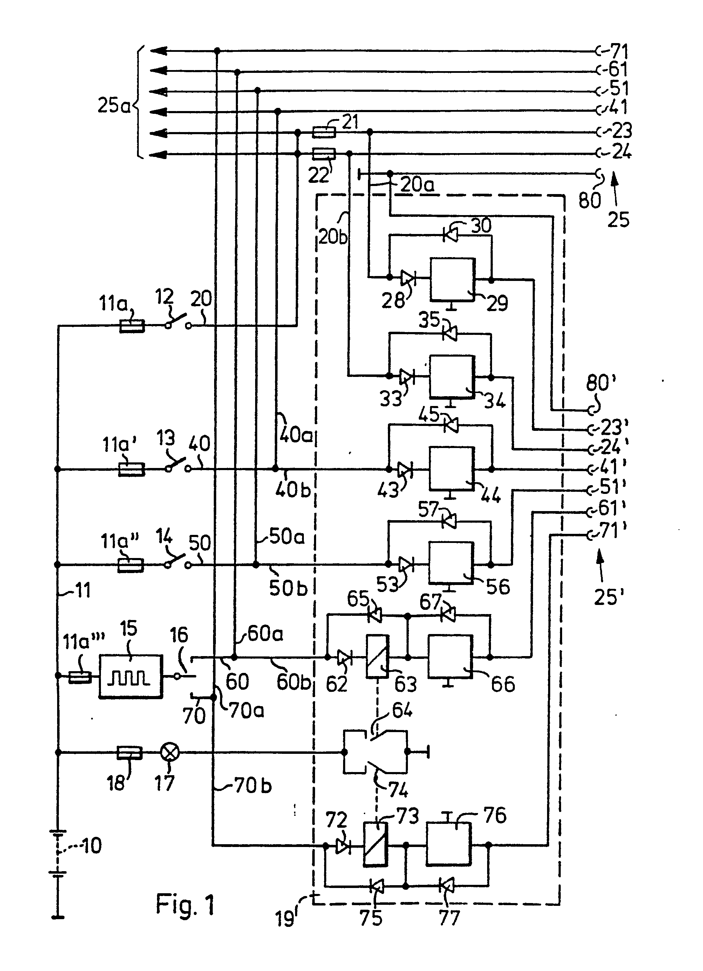

Bei dem in Fig. 1 dargestellten Stromlaufplan bezeichnet 10 eine Fahrzeugbatterie eines Zugfahrzeuges, das zum Ziehen eines Hängers dient. Der Minuspol der Fahrzeugbatterie 10 ist dabei mit Masse verbunden, der Pluspol führt zu einer Sammelleitung 11. An die Sammelleitung 11 ist zunächst ein Lichtschalter 12 angeschlossen, über den die Fahrzeugbeleuchtung eingeschaltet werden kann. Weiterhin ist an die Sammelleitung 11 ein Bremsschalter 13 angeschlossen, der üblicherweise mit dem Bremspedal gekoppelt ist. Weiterhin ist ein Dauerbrems-Schalter 14 an die Sammelleitung 11 angeschlossen, über den eine Dauerbremse des Zugfahrzeuges und des Hängers in Betrieb gesetzt werden kann. Der Dauer-Brems-Schalter 14 steht jedoch im hier vorliegenden Zusammenhang stellvertretend auch für sonstige Einrichtungen, die in einem Zugfahrzeug und einem Hänger angeordnet sein können, beispielsweise eine Kühleinrichtung, eine Klimaanlage oder eine sonstige Komforteinrichtung. Die Erfindung ist insoweit also keinesfalls auf die Verwendung von Dauerbremseinrichtungen beschränkt.

Weiterhin ist an die Sammelleitung 11 ein Blinkgeber 15 angeschlossen, dessen Ausgang zu einem Fahrtrichtungsschalter 16 führt. Schließlich steht mit der Sammelleitung 11 noch eine Hänger-Blinkkontrolleuchte 17 über eine Sicherung 18 in Verbindung. Vor den Elementen 12, 13, 14, 15 sind in an sich bekannter Weise Sicherungen 11a, 11a', 11a'', 11a''' angeordnet.

Vom Lichtschalter 12 führt eine Leitung 20 weg, die sich über Sicherungen 21, 22 in eine Leitung 20a und eine Leitung 20b aufteilt. Die Leitung 20 führt über die Sicherungen 21 und 22 zu Anschlüssen 23, 24 einer ersten Steckdose 25, an der diejenigen Signalspannungen abnehmbar sind, die der Bordspannung des Zugfahrzeuges entsprechen, so wie sie die Fahrzeugbatterie 10 bestimmt. Üblicherweise beträgt diese Spannung 24 V.

Die Leitungen 20a und 20b führen zu Eingängen zweier Kreise. Der eine dieser beiden Kreise besteht aus der Reihenschaltung einer Diode 28 und eines elektronischen Spannungswindlers 29, wobei diese Reinenschaltung zu einer weiteren Diode 30 überbrückt Ist. Der Ausgang des elektronischen Spannungswandlers 29 führt zu einem Anschluß 23' einer weiteren Steckdose 25', an der diejenigen Signalspannungen abnehmbar sind, dle gegenüber der Bordnetzspannung des Zugfahrzeuges vermindert sind. Diese verminderten Signalspannungen betragen üblicherweise 12 V.

Der weitere Kreis ist entsprechend dem ersten Kreis aufgebaut und besteht aus einer Diode 33, einem elektrischen Spannungswandler 34 sowie einer weiteren Diode 35.

Die elektronischen Spannungswandler 29 und 34, ebenso wie die weiter unten noch beschriebenen, weisen bevorzugt drei Anschlüsse auf, wobei der eine Anschluß der Eingang, ein weiterer Anschluß der Ausgang ist und ein dritter Anschluß mit Masse verbunden ist.

Die Anschlüsse 23, 24 der ersten Steckdose 25 bzw. die Anschlüsse 23', 24' der weiteren Steckdose 25 dienen zur Versorgung des linken bzw. rechten Schlußlichtes des Hängers; diese Anschlüsse werden in der Fachsprache auch als (58 L) bzw. (58 R) bezeichnet.

Vom Bremsschalter 13 weg führt eine Leitung 40, die sich ebenfalls in Leitungen 40a, 40b aufteilt. Die Leitung 40a führt zu einem Anschluß 41 der einen Steckdose 25. Die Leitung 40b führt zu einem Kreis, der aus der Reihenschaltung einer Diode 43 und eines elektronischen Spannungswandlers 44 besteht, wobei diese Reihenschaltung wiederum mit einer Diode 25 überbrückt ist. Der Ausgang des elektronischen Spannungswandlers 44 führt zu einem Anschluß 41' der weiteren Steckdose 25'.

Die Anschlüsse 41 bzw. 41' dienen zum Ansteuern des Bremslichtes des Hängers; sie werden in der Fachsprache auch mit (54) bezeichnet.

In ganz entsprechender Weise ist der Kreis aufgebaut, der vom Lauerbrems-Schalter 14 mit der Leitung 50 wegführt, die sich wiederum in Leitungen 50a, 50b aufteilt. Während die Leitung 50a zu elnem Anschluß 51 der Steckdose 25 führt, führt die Leitung 50b wiederum zu einem Kreis, bestehend aus einer Diode 53, einem elektronischen Spannungswandler 56 und einer Diode 57, wobei diese Elemente entsprechend den weiter oben geschilderten Elementen 43 bis 45 verschaltet sind. Der Ausgang des elektronischen Spannungswandlers 56 führt zu einem Anschluß 51' der welteren Steckdose 25'.

Die Anschlüsse 51 bzw. 51' führen zu einer Dauerbremse oder einer ähnlichen Einrichtung des Hängers; sie werden in der Fachsprache auch mit (54g) bezeichnet.

Der Fahrtrichtungsschalten 16 ist in bekannter Weise mit drei Schaltstellungen ausgestattet, wobei in der mittleren Schaltstellung kein Blinklicht angesteuert wird, während in den beiden Endstellungen jeweils des rechte bzw. das linke Blindlicht eingeschaltet wird. Im Zweig des rechten Blinklichtes führt vom Fahrtrichtungsschalter 16 eine Leitung 60 weg, die sich in Leitungen 60a, 60b aufspaltet. Die Leitung 60a führt zu einem Anschluß 61 der Steckdose 25 und die Leitung 60b zunächst über eine Diode 62 zu einem Relais 63 und von dort zu einem elektronischen Spannungswandler 66. Der Spannungswandler 66 ist von einer Diode 67 überbrückt, das Relais 63 von einer Diode 65. Der Ausgang des elektronischen Spannungswandlers 66 führt zu einem Anschluß 51' der weiteren Steckdose 25'. Das Relais 63 besitzt einen Schaltkontakt 64, mit dem die Hänger-Blinkkontrolleuchte 17 an Masse schaltbar ist.

Die Anschlüsse 61 bzw. 61' führen zu den rechten Blinklichtern des Hängers; sie werden in der Fachsprache auch als (R) bezeichnet.

In entsprechender Weise führt für das linke Blinklicht eine Leitung 70 von Fahrtrichtungsschalter 16 weg und teilt sich in Leitungen 70a, 70b auf. Während die Leitung 70a zu einem Anschluß 71 der Steckdose 25 führt, führt die Leitung 70b entsprechend dem Kreis für das rechte Blinklicht über eine Diode 72, ein Relais 73 und einen elektronischen Spannungswandler 76 zu einem Anschluß 71' der weiteren Steckdose 25'. Relais 73 und Spannungswandler 76 sind wiederum mit Dioden 75 bzw. 77 überbrückt.

Die Anschlüsse 71 bzw. 71' dienen zum Versorgen des linken Blinklichtes des Hängers; dieser Anschluß wird in der Fachsprache auch mit (L) bezeichnet.

Die vorstehend geschilderten Bauelemente, soweit sie die elektronischen Spannungswandler 29, 34, 44, 56, 66, 76 samt zugehöriger Beschaltung betreffen, sind vorzugsweise in einer gemeinsamen elektronischen Schalteinheit 19 untergebracht.

Weiterhin ist links oben in Fig. 1 mit 25a angedeutet, daß die verschiedenen Schalter selbstverständlich auch die entsprechenden Leuchten bzw. Einrichtungen des Zugfahrzeuges ansteuern. Im hier interessierenden Zusammenhang werden jedoch nur diejenigen Schaltungsteile beschrieben, die der Ansteuerung des Hängers dienen.

Schließlich verfügen die Steckdosen 25 und 25' noch über Anschlüsse 80 bzw. 80', die in der Fachsprache auch mit (31) bezeichnet werden und gemeinsam Masse führen.

Beim Betätigen eines der Schalter 12, 13, 14 oder 16 gelangt die volle Bordspannung des Zugfahrzeuges einmal an die entsprechenden Anschlüsse der Steckdose 25, so daß im Falle des Mitführens eines Anhängers, der auf die volle Netzspannung ausgelegt ist, dieser mit einem geeigneten Verbindungskabel über die Steckdose 25 angeschlossen werden kann. Zum anderen gelangt die volle Netzspannung jedoch auch auf die elektronischen Spannungswandler 29, 34, 44, 56, 66, 76, dieso ausgelegt sind, daß an ihrem Ausgang in weiter unten noch beschriebener Weise verminderte Signalspannungen stabilisiert abnehmbar sind. Zum Schutz der elektronischen Spannungswandler gegen Verpolen sind in deren Eingang die Dioden 28, 33, 43, 53, 62, 72 vorgesehen, die eine Beschädigung der Spannungswandler dann verhindern, wenn beispielsweise bei Reparaturarbeiten die elektronische Schalteinheit 19 irrtümlich mit falscher Polarität angeschlossen wird. Die jeweils in Parallelschaltung angeordneten Schutzdioden 30, 45, 57, 65, 67, 75, 77 dienen dazu, die Spannungswandler bzw. die Relais 63, 73 gegen Überspannungen zu schützen. Diese Überspannungen können dann auftreten, wenn der Regler des Generators des Zugfahrzeugs defekt ist, so daß eine Spannungsbegrenzung durch den Regler nicht mehr eintritt.

Beim Betätigen des Fahrtrichtungsschalters 16 in der einen oder der anderen Richtung werden die Relais 63, 73 nur dann betätigt, wenn ein Strom über die Leitung 60b bzw. 70b fließt. Dies ist nur dann der Fall, wenn sämtliche nachgeordneten Schalteinheiten, einschließlich der elektronischen Spannungswandler 66, 76 und der in Hänger befindlichen Blinklampen ordnungsgemäß arbeiten. Dann wird die eine Seite der Hänger-Blinkkontrolleuchte 17 über den Schaltkontakt 64 bzw. den Schaltkontakt 74 an Masse gelegt, so daß die Leuchte 17, die im Fahrerhaus angeordnet ist, aufleuchtet und damit anzeigt, daß die Blinkeinrichtung ordnungsgemäß arbeitet.

Es versteht sich, daß die Relais 63, 73 nur beispielhaft als Stromfühler zu verstehen sind. Selbstverständlich können auch sonstige Schalteinheiten, die eine Stromerkennung gestatten, verwendet werden, beispielsweise elektronische Bauelemente wie Transistoren, Thyristoren, Spannungsabgriff über Widerstand, Dioden oder dergleichen.

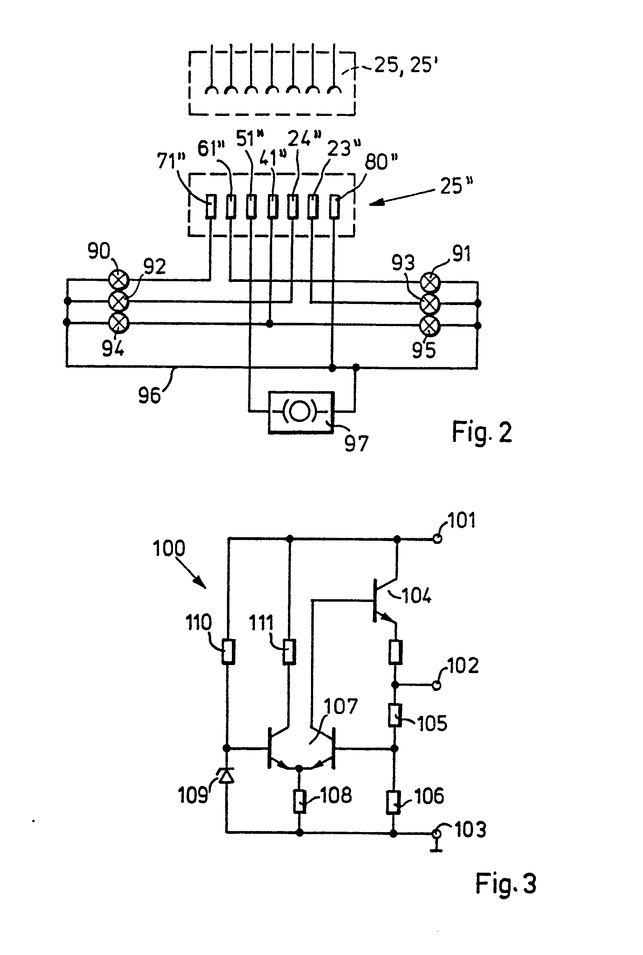

Fig. 2 zeigt den Stromlaufplan eines Hängers, der über ein entsprechendes Verbindungskabel mit der Steckdose 25 oder 25' verbunden werden kann, je nachdem, auf welche Bordspannung die elektrische Anlage des Hängers ausgelegt ist.

Der Hänger weist zunächst ein linkes Blinklicht 90 sowie ein rechtes Blinklicht 91 auf. Weiterhin sind ein linkes Rücklicht 92, ein rechtes Rücklicht 93, ein linkes Bremslicht 94 und ein rechtes Bremslicht 95 vorgesehen. Schließlich verfügt der Hänger über eine gemeinsame Masseleitung 96 sowie eine Dauerbremseinrichtung 97 oder dergleichen. Wie man sieht, werden von einem Stecker 25" die Blinklichter 90, 91 über die Anschlüsse 71" bzw. 61" versorgt, während die Rücklichter 92, 93 an die Anschlüsse 24" bzw. 23" angeschlossen sind. Die Bremslichter 94, 95 werden gemeinsam an den Anschluß 41" angeschlossen, während die Dauerbremse 97 über den Anschluß 51" versorgt wird. Sämtliche Lichter 90 bis 35 sind, ebenso wie die Dauerbremse 97, einseitig an die gemeinsame Masseleitung 96 angeschlossen, die zum Anschluß 80" geführt ist.

Wie man leicht sieht, kann demnach die gesamte elektrische Einrichtung des Hängers durch Verbinden des Steckers 25" mit einem der Stecker 25 oder 25' des Zugfahrzeuges in Betrieb gesetzt werden.

Fig. 3 zeigt schließlich noch ein Beispiel für einen elektronischen Spannungswandler, wie er im Stromlaufplan gemäß Fig. 1 verwendet werden kann.

Der elektronische Spannungswandler in Fig. 3 ist gesamthaft mit 100 bezeichnet. Er verfügt über eine Eingangsklemme 101, eine Ausgangsklemme 102 sowie eine Masseklemme 103. Zwischen Eingangsklemme 101 und Ausgangsklemme 102 ist ein Längsregler in Gestalt eines Regeltransistors 104 angeordnet. Zwischen der Ausgangsklemme 102 und der Massklemme 103 befindet sich ein Spannungsfühler in Gestalt einws Spannungsteilers 105, 106. Der Abgriff des Spannungsteilers 105, 106 ist an einen Eingang eines Differenzverstärkers 107 mit gemeinsamen Emitterwiderstand 108 angeschlossen. Der andere Eingang des Differenzverstärkers 107 ist mit einer Bezugsspannung beschaltet, die im einfachsten Fall aus der Reihenschaltung einer Zenerdiode 109 mit einem Widerstand 110 gewonnen werden kann. Während der eine Ausgang des Differenzverstärkers 107 mit einem Widerstand 111 an eine Bezugsspannung angeschlossen ist, dient der andere Ausgang zum Steuern des Regeltransistors 104. Es versteht sich, daß die dargestellte Schaltungsanordnung nur beispielhaft zu verstehen ist, selbstverständlich können weitere Schaltungsmaßnahmen vorgesehen werden, die der Temperaturkompensation, der Erhöhung der Regelgenauigkeit, der Erweiterung des Regelbereiches und dergleichen dienen.

Durch den Regeltransistor 104 mit seinem Emitterwiderstand wird erreicht, daß auch bei nichtbelastetem Ausgang sich dort eine gegenüber der Eingangsspannung verminderte Ausgangsspannung einstellt. Diese Ausgangsspannung wird dadurch auf einen festen Wert geregelt, daß die Ausgangsspannung mit dem Spannungsteiler 105, 106 erfaßt und die Abweichung von einer Führungsgröße dem Regeltransistor 104 zugeführt wird, der für ein entsprechendes Nachstellen der Ausgangsspannung auf den Sollwert sorgt. Auf diese Weise ist es mit Hilfe der erfindungsgemäßen Schaltungsanordnung möglich, Lampen mit unterschiedlichen Innenwiderständen, die fertigungstechnisch bedingt sind, mit einer verminderten und konstanten Spannung zu betreiben, so daß bei minimaler Verlustleistung keine ungünstige Verschiebung zu höheren Spannungen eintreten kann, wenn der Innenwiderstand der Lampen vom Sollwert zu stark abweicht.

**Patentansprüche**

1. Schaltungsanordnung für ein Zugfahrzeug eines aus dem Zugfahrzeug und einem Hänger bestehenden Wagenzuges, bei der das Zugfahrzeug wenigstens eine Steckdose (25') aufweist, an der gegenüber der Betriebsspannung des Zugfahrzeuges verminderte Signalspannungen für den Hänger abnehmbar sind und vorzugsweise eine weitere Steckdose (25) vorgesehen ist, dle Signalspannungen führt, die der Betriebsspannung des Zugfahrzeuges entsprechen, dadurch gekennzeichnet, daß Anschlüsse (23', 24', 41', 51', 61', 71') der einen Steckdose (25') von der elektrischen Einrichtung des Zugfahrzeuges über elektronische Spannungswandler (29, 34, 44, 56, 66, 76, 100) mit der Betriebsspannung des Zugfahrzeuges entsprechenden Signalspannungen beaufschlagt werden.

2. Schaltungsanordnung nach Anspruch 1 für ein Zugfahrzeug mit zwei Steckdosen (25, 25'), dadurch gekennzeichnet, daß Anschlüsse (23, 24, 41, 51, 61, 71) der weiteren Steckdose (25) über die elektronischen Spannungswandler (29, 34, 44, 56, 66, 76; 100) mit den entsprechenden Anschlüssen (23', 24', 41', 51', 61', 71') der einen Steckdose (25') verbunden sind.

3. Schaltungsanordnung nach Anspruch 1 oder 2, dadurch gekennzeichnet, daß der elektronische Spannungswandler (100) zwischen Eingang (101) und Ausgang (102) einen Längsregler (104) aufweist, und daß die Ausgangsspannung geregelt stabilisiert ist.

4. Schaltungsanordnung nach Anspruch 3, dadurch gekennzeichnet, daß im Ausgang des elektronischen Spannungswandlers (100) eln Spannungsfühler (105, 106) angeordnet ist, dessen Signal einem Differenzverstärker (107) zugeführt wird, der darüberhinaus mit einem Spannungsnormal (109, 110) beschaltet ist und dessen Ausgang den Längsregler (104) steuert.

5. Schaltungsanordnung nach einem der Ansprüche 1 bis 4, dadurch gekennzeichnet, daß die Spannungswandler (29, 34, 44, 56, 66, 76; 100) mit einer elektronischen Kurzschlußstrombegrenzung versehen sind.

6. Schaltungsanordnung nach einem der Ansprüche 1 bis 5, dadurch gekennzeichnet, daß die elektronischen Spannungswandler (29, 34, 44, 56, 66, 76) im Eingang eine Verpolschutzdiode (28, 33, 43, 53, 62, 72) aufweisen.

7. Schaltungsanordnung nach einem der Ansprüche 1 bis 6, dadurch gekennzeichnet, daß parallel zu den elektronischen Spannungswandlern (29, 34, 44, 56, 66, 76) eine Überspannungs-Schutzdiode (30, 35, 45, 57, 67, 77) geschaltet ist.

8. Schaltungsanordnung nach einem der Ansprüche 1 bis 7, dadurch gekennzeichnet, daß die Anschlüsse (23', 24', 41', 51',61', 71') der einen Steckdose (25') für das rechte bzw. linke Rücklicht (92, 93), das Bremslicht (94, 95), eine Dauerbremse (97) oder dergleichen und das rechte bzw. linke Blinklichs (90, 91) des Hängers mit jeweils einem elektronischen Spannungswandler (29, 34, 44, 56, 66, 76) beschaltet sind.

9. Schaltungsanordnung nach Anspruch 8, dadurch gekennzichnet, daß die elektronischen Spannungswandler (29,-34) für die Anschlüsse (23', 24') des rechten bzw. linken Rücklichtes (92, 93) des Hängers hinter den Sicherungen (21, 22) der Rücklichter des Zugfahrzeuges angeschlossen sind.

10. Schaltungsanordnung nach Anspruch 3 oder 9, dadurch gekennzeichnet, daß die elektronischen Spannungswandler (66, 76) für die Anschlüsse (61', 71') des rechten bzw. linken Blinklichtes (90, 91) des Hängers über einen Fahrtrichtungsschalter (16) von Blinkgeber (15) gespeist werden.

11. Schaltungsanordnung nach Anspruch 10, dadurch gekennzeichnet, daß in Reihe zu den elektronischen Spannungswandlern (66, 76) für die Anschlüsse (61', 71') des rechten bzw. linken Blinklichtes (90, 91) des Hängers Stromfühler angeordnet sind, die eine Kontrolleuchte (17) für die Blinklichter (90, 91) des Hängers betätigen.

12. Schaltungsanordnung nach Anspruch 11, dadurch gekennzeichnet, daß die Stromfühler als Relais (63, 73) ausgebildet sind, über deren Schaltkontakte (64, 74) die Kontrolleuchte (17) betätigbar ist.

13. Schaltungsanordnung nach Anspruch 12, dadurch gekennzeichnet, daß parallel zu den Relais (63, 73) Schutzdioden (65, 75) angeordnet sind.

## Claims

1. Switching arrangemenr for the pulling vehicle of a vehicle train consisting of a pulling vehicle and a trailer, whose pulling vehicle has at least one electric socker (25'), to which signal voltages for the trailers reduced in amplitude in relation to the operating voltage are applied and preferably aa further electric socket (25) is provided, which conducts signal voltages which correspond to the operating voltage of the pulling vehicle, characterised in that signal voltages corresponding to the operating voltage of the pulling vehicle are supplied to connections (23', 24', 41', 51', 61', 71') of the one electric socket (25') from the electrical installation of the pulling vehicle through electric voltage transformers (29, 34, 44, 56, 66, 76, 100).

2. Switching arrangement according to claim 1 for a pulling vehicle with two electric sockets (25, 25'), characterised in that connections (23, 24, 41, 51, 61, 71) of the additional electrical socket (25) are connected across the electronic voltage transformers (29, 34, 44, 56, 66, 76, 100) with the corresponding connections (23', 24', 41', 51', 61', 71') of the original socket (25').

3. Switching arrangement according to claim 1 or 2, characterised in that the electronic voltage transformer (100) has a series control unit between entrance (101) and exit (102), and that the output voltage is stabilised in a regulated manner.

4. Switching arrangement according to claim 3, characterised in that a voltage sensor (105, 106) is positioned at the output of the electronic voltage transformer, whose signal is led to a differential amplifier (107) which is further wired with a calibrated power source (109, 110) and whose output controls the series control unit (104).

5. Switching arrangement according to one of claims 1 to 4, characterised in that the voltage transformers (29, 34, 44, 56, 66, 76; 100) are provided with an electronic short-circuit current limit.

6. Switching arrangement according to one of claims 1 to 5, characterised in that the electronic voltage transformers (29, 34, 44, 56, 66, 76) have a wrong polarity protecting diode (28, 33, 43, 53, 62, 72).

7. Switching arrangement according to one of claims 1 to 6, characterised in that an excess voltage protection diode (30, 35, 45, 57, 67, 77) is wired in parallel to the electronic voltage transformers.

8. Switching arrangement according to one of claims 1 to 7, characterised in that the connections (23', 24', 41', 51', 61', 71') of the one electric socket (25') are wired with an electronic voltage transformer for each of: the right, or left rear light (92, 93), the brake light (94, 95), a sustained-action brake (97) or similar and the right, or left, blinker light (90, 91) of the trailer.

9. Switching arrangement according to claim 8, characterised in that the electronic voltage transformers (29, 34) for the connections (23', 24') of the right or left, rear light (92, 93) of the trailer are connected behind the fuses (21, 22) of the rear lights of the pulling vehicle.

10. Switching arrangement according to claim 8 or 9, characterised in that the electronic voltage transformers (66, 76) for the connections (61', 71') of the right, or left blinker light (90, 91) of the trailer are fed from the flasher (15) through a commutator switch.

11. Switching arrangement according to claim 10, characterised in that current sensors, activating a control light (17) for the blinker lights (90, 91) of the trailer, are positioned in series with the electronic voltage transformers (66, 76) for the connections (61', 71') of the right, or left, blinker light (90, 91) of the trailer.

12. Switching arrangement according to claim 17, characterised in that the current sensors are developed as relays (63, 73), through whose switch contacts (64, 74) the control light (17) may be activated.

13. Switching arrangement according to claim 12, characterised in that protection diodes (65, 75) are positioned in parallel with the relays.

## Revendications

1. Dispositif de branchement électrique pour un véhicule de traction d'un train de remorques, constitué du véhicule de traction et d'une remorque, dans lequel le véhicule de traction présente un branchement (25') permettant l'alimentation, pour la remorque, de tension reduite par rapport à la tension de service et dans lequel est prévu, de préférence, un autre branchement (25) qui amène des tensions correspondant à la tension de servide du véhicule de traction, caractérisé en ce que des tensions correspondant à la tension de l'installation électrique du véhicule de traction sont munies aux connexions (23', 24', 41', 51', 61', 71') du premier branchement (25') par l'intermédiaire de transformateurs électroniques (29, 34, 44, 56, 66, 76, 100).

2. Dispositif de branchement électrique selon la revendication 1, pour un véhicule de traction a deux branchements (25, 25'), caractérisé en ce que les connexions (23, 24, 41, 51, 61, 71) du second branchement (25) sont reliées par l'intermédiaire des transformateurs électroniques (29, 34, 44, 56, 66, 76, 100) aux connexions correspondantes (23', 24', 41', 51', 61', 71') du premier branchement (25').

3. Dispositif de branchement selon la revendication 1 ou 2, caractérisé en ce que le transformateur électronique (100) présente, entre l'entrée (101) et la sortie (102), un régulateur de longueur (rhéostat) et que la tension de sortie régulée est stabilisée.

4. Dispositif de branchement selon la revendication 3, caractérisé en ce que, à la sortie du transformateur électronique (100), est disposé un palpeur de tension (105, 106) dont le signal est amené à un amplificateur différentiel (107), qui est en outre branché avec un régulateur de tension (109, 110) et dont la sortie commande le régulateur de longueur (rhéostat) (104).

5. Dispositif de branchement selon l'une des revendications 1 à 4, caractérisé en ce que les transformateurs (29, 34, 44, 56, 66, 76, 100) sont munis d'un limiteur de courtcircuit.

6. Dispositif de branchement selon l'une des revendications 1 à 5, caractérisé en ce que les transformateurs électoniques (29, 34, 44, 56, 66, 76) présentent à l'entrée une diode protectrice contre fausse polarité, (28, 33, 43, 53, 62, 72).

7. Dispositif de branchement selon l'une des revendications 1 à 6, caractérisé en ce qu'est branchée, en parallèle avec les transformateurs (29, 34, 44, 56, 66, 76) une diode protectrice de surtension (30, 35, 45, 57, 67, 77).

8. Dispositif de branchement selon l'une des revendications 1 à 7, caractérisé, en ce que les connections (23', 24', 41', 51', 61', 71') du premier branchement (25') pour le feu arrière droit et/ou gauche (92, 93), le feu de stop (94, 95), un frein continu (97) ou analogues et le feu clignotant droit et/ou gauche (90, 91) de la remorque sont branchées chacune à un transformateur électronique (29, 34, 44, 56, 66, 76);

9. Dispositif de branchement selon la revendication 8, caractérisé en ce que les transformateurs électroniques (29, 34) pour les connexions (23', 34') de feu arrière droit et/ou gauche (92, 93) de la remorque sont reliées derrière les fusibles (21, 22) des feux arrières du vehicule de traction.

10. Dispositif de branchement selon la revendication 8 ou 9, caractérisé en ce que les transformateurs électroniques (66; 76) pour les connexions (61', 71') du feu clignotant droit et/ou gauche (90, 91) de la remorque sont alimentés par l'intermédiaire d'un commutateur pour indicateur de direction (16), par le clignotant (15).

11. Dispositif de branchement selon la revendication 10, caractérisé en ce que sont montés, en série avec les transformateurs électroniques (66, 76) pour les connexions (61', 71') du feu clignotant droit et/ou du feu clignotant gauche (90, 91) de la remorque, des palpeurs de courant qui actionnent une lumière de contrôle (17) pour les feux clignotants (90, 91).

12. Dispositif de branchement selon la revendication 11, caractérisé en ce que les palpeurs de courant sont réalisés comme relais (63, 73), qui actionnent la lumière de contrôle (17) à travers leurs contacts (64, 74) de commutation.

13. Dispositif de branchement selon la revendication 12, caractérisé en ce que des diodes protectrices (65, 75) sont disposées en parallèle aux relais (63, 73).

Fig. 1

Fig. 2

Fig. 3